# FASCICULE DE BREVET EUROPEEN

(11) **EP 0 432 071 B1**
(45) Date de publication et mention de la délivrance du brevet: **21.09.1994**
(21) Numéro de dépôt: 90450015.4
(22) Date de dépôt: 08.11.1990
(51) Int. Cl.: F24D 19/10

(54) **Dispositif de sélection de circuit d'eau pour chaudière pour le chauffage et l'eau chaude sanitaire**
Wasserkreislaufumstellanlage für Kessel für Zentralheizung und Brauchwasser
Water circuit selector for boiler for central heating and sanitary hot water

(30) Priorité: 08.11.1989 FR 8914820
(43) Date de publication de la demande: 12.06.1991
(73) Titulaire: SOCIETE ANONYME DITE MULLER & CIE, F-75018 Paris (FR)
(72) Inventeur: Arribas, Cécilio, F-02006 Laon (FR)
(74) Mandataire: Thébault, Jean-Louis

(56) Documents cités:
- EP-A- 0 358 843
- CH-A- 310 188
- DE-A- 1 653 743
- DE-A- 2 607 495

## Description

La présente invention a trait aux chaudières destinées à la fourniture à la fois de l'eau chaude sanitaire en été comme en hiver et du chauffage et vise plus particulièrement un dispositif assurant dans de telles chaudières la sélection entre le circuit de chauffage et celui de l'eau chaude sanitaire et destiné plus précisément à privilégier en hiver la fourniture de l'eau chaude sanitaire.

Habituellement les chaudières du type ci-dessus comprennent un corps de chauffe unique portant à température de l'eau envoyée, par l'intermédiaire d'un clapet d'inversion, soit dans le circuit externe des radiateurs de chauffage, soit dans un circuit fermé interne à la chaudière dans lequel est plongé un serpentin d'un circuit d'alimentation en eau chaude sanitaire.

Pour réaliser le passage du circuit chauffage au circuit sanitaire, il est d'usage d'utiliser une pression différentielle créée par le débit d'eau sanitaire agissant sur un équipage à membrane d'une vanne inverseuse.

L'inconvénient de ce système est la complexité de réalisation et d'usinage auquel s'ajoute la fragilité d'un système à membrane.

Par ailleurs, par le document EP-A-0.358.843, publié le 21.03.90, on connaît un dispositif de commande sélective de la fourniture d'eau de chauffage et d'eau chaude sanitaire pour chaudière du type comprenant un échangeur d'eau de chauffage et un échangeur d'eau chaude sanitaire, ledit dispositif étant constitué de deux pompes de circulation montées en parallèle, présentant une sortie commune reliée à l'entrée de l'échangeur air/eau d'eau de chauffage et reliées, l'une, à la canalisation de retour de chauffage de l'installation et, l'autre, à la sortie du circuit primaire de l'échangeur d'eau chaude sanitaire, un système à clapet anti-retour étant prévu dans le circuit commun de sortie de façon que la mise en fonctionnement de l'une des pompes entraîne l'isolement de l'autre pompe.

Plus précisément, ce système à clapet comporte une bille unique susceptible de se déplacer dans une chambre commune aux deux pompes entre un premier siège interposé entre ladite chambre et l'une des pompes et un second siège interposé entre la chambre et la seconde pompe.

Un tel système présente des inconvénients. Le clapet-bille se déplaçant d'un siège à l'autre, au démarrage de l'une des pompes il y a forcément une circulation d'eau dans les deux circuits de pompe pendant un certain temps qui n'est pas négligeable et dépend de la distance entre les deux sièges. Le temps de réponse d'un tel système de clapet n'est donc pas très rapide. De plus, au repos, les deux circuits de pompe sont normalement ouverts, l'étanchéité n'étant due qu'à la pression hydraulique appliquant la bille contre l'un des deux sièges. Enfin, suivant la densité de la bille, celle-ci peut subir une force perturbatrice due au principe d'Archimède.

Le but de l'invention est de proposer un dispositif de sélection de circuit du type à deux pompes en parallèle fonctionnant en alternance, ne présentant pas les inconvénients mentionnés ci-dessus, plus simple et polyvalent dans sa conception, plus économique à réaliser et plus facile dans son entretien.

A cet effet, l'invention a pour objet un dispositif de sélection de circuit pour chaudière pour le chauffage et l'eau chaude sanitaire selon la revendication unique.

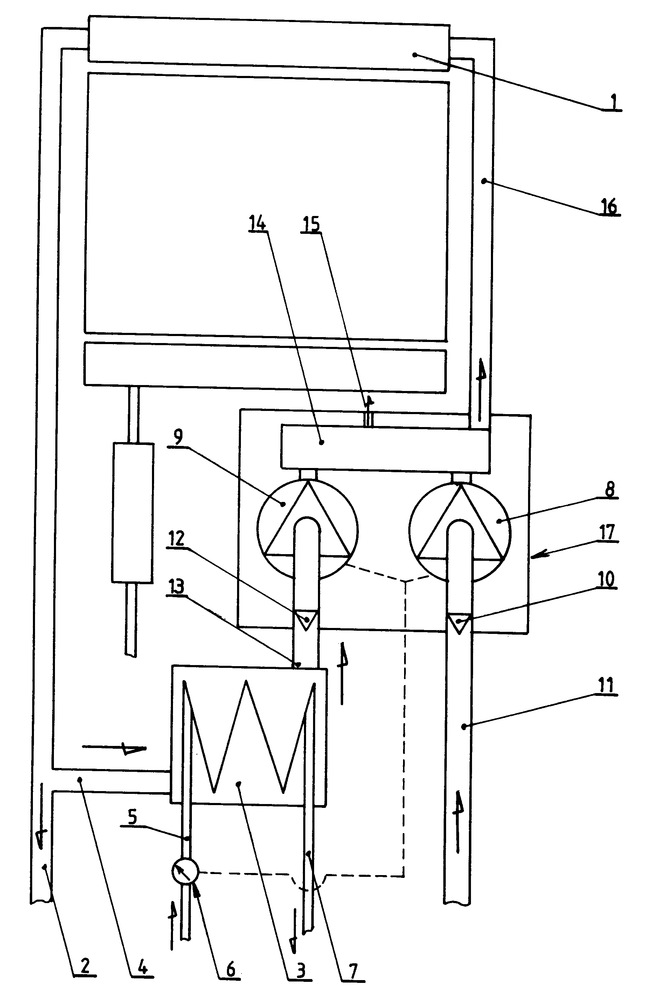

D'autres caractéristiques et avantages ressortiront de la description qui va suivre d'un mode de réalisation du dispositif selon l'invention, description donnée à titre d'exemple uniquement et en regard du dessin annexé sur lequel la figure unique représente schématiquement un dispositif conforme à l'invention raccordé aux échangeurs d'eau de chauffage et d'eau chaude sanitaire d'une chaudière du type défini plus haut.

Sur cette figure unique, on a représenté schématiquement en 1 l'échangeur air/eau d'eau de chauffage, en 2 la canalisation de départ d'eau de chauffage, en 3 l'échangeur eau/eau d'eau chaude sanitaire dont l'entrée du circuit primaire est reliée par une canalisation 4 à la canalisation 2.

Le circuit secondaire de fourniture d'eau chaude sanitaire de l'échangeur 3 est représenté par la canalisation d'entrée 5 équipée d'un détecteur symbolisé en 6 et par la canalisation 7 de fourniture d'eau chaude.

Le dispositif de sélection comporte deux pompes de circulation en parallèle, respectivement 8 et 9.

L'entrée de l'une des pompes (8) est munie d'un clapet anti-retour 10 et est reliée à la canalisation de retour d'eau de chauffage vers l'échangeur 1.

L'entrée de l'autre pompe (9) est également munie d'un clapet anti-retour 12 et est reliée à la canalisation 13 de sortie du circuit primaire de l'échangeur 3.

Le détecteur 6 est relié aux moteurs des deux pompes 8,9.

Les sorties des pompes 8 et 9 débouchent dans une boîte de dégazage 14 munie d'une purge 15 et d'une sortie reliée par une canalisation 16 à l'entrée d'eau de l'échangeur 1.

En fonction chauffage, l'hiver, la pompe de circulation 8 fonctionne assurant le débit d'eau de retour de chauffage en direction de l'échangeur 1 suivant le trajet fléché.

Dans ce cas, le clapet 10 est ouvert, cependant que, lorsqu'il n'y a pas de demande d'eau chaude sanitaire, la pompe 9 ne fonctionne pas et le clapet 12 est fermé, interdisant la circulation de l'eau de chauffage dans le circuit primaire de l'échangeur 3.

Si, alors que la chaudière est toujours en fonction chauffage, une demande d'eau chaude sanitaire se manifeste, elle est détectée par le détecteur 6 qui commande l'arrêt de la pompe 8 et la mise en service de la pompe 9.

Bien entendu, si la pompe 8 se trouvait à ce moment hors service, elle y demeure.

Le clapet 12 est alors ouvert et le clapet 10 fermé. A partir de ce moment, le circuit primaire de l'échangeur 3 est alimenté et l'eau chaude de chauffage est dérivée par la canalisation 4, l'échangeur 3 et la canalisation 13 suivant le trajet fléché. De l'eau chaude est disponible dans le circuit 5,7.

En fonctionnement été, la pompe 8 est arrêtée et le clapet fermé en permanence, empêchant toute circulation dans le circuit de chauffage central.

Sur demande d'eau chaude sanitaire, le détecteur 6 commande la mise en service de la pompe 9 qui force l'eau de la canalisation 2 vers le circuit primaire de l'échangeur 3.

Dans tous les cas, l'arrêt de la demande d'eau chaude sanitaire provoque, par le détecteur 6, l'arrêt de la pompe 9, la pompe 8 étant alors, soit remise en service, si l'on se trouve en fonctionnement hiver, soit laissée arrêtée, si l'on est en position été.

Les clapets anti-retour 10,12 sont des clapets à ressort dont la course est faible. Lorsqu'un tel clapet est écarté de son siège et permet le passage du fluide, il emmagasine une certaine énergie qui sera restituée lors de la fermeture du clapet, ce qui confère à celui-ci un temps de réponse particulièrement court.

De plus, la pression du ressort renforcée par la pression hydraulique assure une étanchéité excellente.

Enfin, au repos, les deux circuits des pompes 8,9 sont normalement fermés et lorsque l'une des pompes est activée, il ne peut se produire de circulation dans les deux circuits de pompe du fait de l'indépendance totale des deux clapets 10 et 12.

L'ensemble des deux pompes 8,9, des clapets 10,12 et de la boîte de dégazage 14 est regroupé en une unité distincte 17 qui peut être indifféremment montée sur des chaudières de différents types, à production d'eau chaude instantanée ou par accumulation, qu'elles soient murales ou au sol.

Un tel agencement des deux circulateurs (8,9) permet, soit de choisir des débits identiques, soit des débits différents adaptés aux conditions d'utilisation.

Le dispositif selon l'invention présente les avantages suivants :
- simplicité de réalisation et de raccordement ;
- fiabilité du fait de l'emploi de moteurs de circulateurs (8,9) et de clapets indépendants (10,12) dont l'efficacité, la rapidité de réponse et la longévité ne sont plus à démontrer ;
- accessibilité des composants regroupés sur la platine de l'unité 17, permettant une maintenance aisée par un personnel ne possédant qu'une faible qualification.

Bien entendu, les clapets 10,12 pourraient être montés en aval des pompes 8,9 entre celles-ci et la boîte de dégazage 14.

## Revendications

1. Dispositif de sélection de circuit pour chaudière pour le chauffage et l'eau chaude sanitaire, du type comprenant un échangeur d'eau de chauffage (1) et un échangeur d'eau chaude sanitaire (3), ledit dispositif étant constitué de deux pompes de circulation (8,9) montées en parallèle, présentant une sortie commune reliée à l'entrée de l'échangeur air/eau d'eau de chauffage (1) et reliées, l'une (8), à la canalisation (11) de retour de chauffage de l'installation et, l'autre (9), à la sortie (13) du circuit primaire de l'échangeur d'eau chaude sanitaire (3), un système à clapet anti-retour étant prévu afin que la mise en fonctionnement de l'une des pompes entraîne l'isolement de l'autre pompe, caractérisé en ce qu'il comporte un détecteur (6) de demande d'eau agencé dans le circuit secondaire de fourniture d'eau chaude sanitaire dudit échangeur (3) et relié aux moteurs des pompes (8,9) en sorte de commander la mise en ou hors service de la pompe (9) affectée à l'eau chaude sanitaire en cas de demande d'eau ou d'arrêt de demande d'eau respectivement, tout en agissant en sens inverse sur l'autre pompe (8) excepté si cette dernière n'est pas, en permanence ou provisoirement, hors service, en ce que ledit système à clapet anti-retour est constitué de deux clapets à ressort indépendants (10,12) montés chacun dans le circuit de l'une des pompes (8,9), en amont de la sortie commune et immédiatement en amont ou en aval de la pompe, en ce qu'une boîte de dégazage commune (14) est prévue à la sortie desdites pompes et en ce que l'ensemble des composants : pompes (8,9), clapets (10,12), boîte de dégazage (14), sont regroupés dans une unité distincte (17) connectable aux canalisations appropriées de chaudières conventionnelles de type quelconque.

## Patentansprüche

1. Wasserkreislaufumstellvorrichtung für einen Kessel für Heizung und warmes Brauchwasser, eines Typs umfassend einen Wärmetauscher (1) für Heizwasser und einen Wärmetauscher (3) für heißes Brauchwasser, wobei besagte Vorrichtung von zwei Kreislaufpumpen (8, 9) gebildet wird, die parallel geschaltet sind, einen gemeinsamen Ausgang, der mit dem Eingang des Luft/Wasser-Wärmetauschers (1) für Heizwasser verbunden ist, aufweisen und von denen eine (8) mit der Rückflußleitung (11) der Heizungsinstallation und die andere (9) mit dem Ausgang (13) des Primärkreises des Wärmetauschers (3) für heißes Brauchwasser verbunden ist, wobei ein Rückschlagventilsystem vorgesehen ist, damit das Ingangsetzen der einen der Pumpen die Isolierung der anderen Pumpe bewirkt, dadurch **gekennzeichnet,** daß sie einen Wasseranforderungsdetektor (6) umfaßt, der in dem Sekundärkreis zum Liefern von heißem Brauchwasser durch besagten Wärmetauscher (3) angeordnet und mit den Motoren der Pumpen (8, 9) derart verbunden ist, um das Ein- und Ausschalten der für warmes Brauchwasser bestimmten Pumpe (9) im Falle der Wasseranforderung bzw. des Aufhörens der Wasseranforderung zu steuern, während in umgekehrtem Sinn auf die andere Pumpe (8) eingewirkt wird, außer wenn diese letztere weder permanent noch vorläufig außer Betrieb ist, daß das Rückschlagventilsystem aus zwei unabhängigen federvorgespannten Klappenventilen gebildet wird, die jeweils im Kreis der einen der Pumpen (8, 9) vor dem gemeinsamen Ausgang und unmittelbar vor oder nach der Pumpe angeordnet sind, daß am Ausgang besagter Pumpen ein Entgasungsgefäß (14) vorgesehen ist, und daß die Gesamtheit der Bauteile aus Pumpen (8, 9), Klappenventilen (10, 12), Entgasungsgefäß (14), in einer getrennten Einheit (17) gruppiert sind, die mit geeigneten Leitungen konventioneller Heizungen irgendeines Typs verbindbar sind.

## Claims

1. Circuit selection device for a boiler for heating and sanitary hot water, of the type comprising a heating-water exchanger (1) and a sanitary hot water exchanger (3), the said device consisting of two circulation pumps (8, 9) mounted in parallel, having a common outlet connected to the heating-water air/water exchanger (1) and one of them (8) being connected to the heating return pipe (11) of the installation and the other one (9) to the outlet (13) of the primary circuit of the sanitary hot water exchanger (3), a non-return valve system being provided in order for the start-up of one of the pumps to cause the other pump to be isolated, characterised in that it includes a water-demand detector (6) arranged in the secondary sanitary hot water supply circuit of the said exchanger (3) and connected to the motors of the pumps (8, 9) so as to control the switching on or off of the pump (9) allocated to the sanitary hot water in the event of a water demand or cessation of water demand respectively, whilst acting in the opposite manner on the other pump (8) except if the latter is not, permanently or temporarily, out of service, in that the said non-return valve system consists of two independent spring valves (10, 12) each mounted in the circuit of one of the pumps (8, 9), upstream of the common outlet and immediately upstream or downstream of the pump, in that a common degassing chamber (14) is provided at the outlet of the said pumps and in that all the components: pumps (8, 9), valves (10, 12) and degassing chamber (14), are grouped together in a separate unit (17) which can be connected to the appropriate pipes of conventional boilers df any type.
